# EUROPÄISCHE PATENTSCHRIFT

(11) **EP 0 925 005 B1**
(45) Veröffentlichungstag und Bekanntmachung des Hinweises auf die Patenterteilung: **07.11.2001**
(21) Anmeldenummer: 98943687.8
(22) Anmeldetag: 14.07.1998
(51) Int. Cl.: A47B 1/00

(54) **DREHGELENK FÜR EIN TRAVERSENPROFIL**
ROTATING JOINT FOR A PROFILED CROSSBEAM
ARTICULATION TOURNANTE POUR ENTRETOISE PROFILEE

(30) Priorität: 15.07.1997 DE 19730285
(43) Veröffentlichungstag der Anmeldung: 30.06.1999
(73) Patentinhaber: Niehaus, Joachim, 59469 Ense (DE)
(72) Erfinder: Niehaus, Joachim, 59469 Ense (DE)
(74) Vertreter: Dörner, Lothar, Dipl.-Ing.
(86) Internationale Anmeldenummer: DE9801962
(87) Internationale Veröffentlichungsnummer: WO9903373

(56) Entgegenhaltungen:
- EP-A- 0 309 420
- EP-A- 0 365 487
- EP-A- 0 396 179
- DE-A- 3 603 981
- DE-A- 3 612 109
- DE-A- 3 744 702
- DE-A- 3 744 706
- GB-A- 1 438 760
- US-A- 4 322 098

## Beschreibung

Die Erfindung betrifft ein Drehgelenk - einen Gelenkverbinder - für ein Traversenprofil mit innenliegendem Kabelkanal, das aus einem Oberteil und einem Unterteil besteht, die miteinander verschraubt und an ihren einander abgewandten Stirnseiten mit Befestigungsflanschen versehen und in ihrem zentralen Drehbereich schraubenlos ausgeführt sind.

Drehgelenke der genannten Art finden Anwendung bei Verkettungen von Gestellen, die im Büromöbelbereich zum Aufbau von Schreibtischen, Konferenztischen usw. eingesetzt werden. Die Gestelle nehmen dabei Konsolen auf, an denen über einen Plattenträgerrahmen Tischplatten befestigt sind. Das Verketten der Gestelle mit Hilfe der Drehgelenke und das anschließende Befestigen angepaßter Tischplatten ermöglichen es, eine Vielzahl von Schreibtisch- und Konferenztischformen herzustellen.

Die Gestelle bestehen aus vertikalen Stützen, die an ihrem dem Boden zugewandten Ende Kufen aufweisen, um eine hohe Standfestigkeit zu erreichen. An ihrem dem Boden abgewandten Ende sind die Stützen mit den horizontal angeordneten Traversenprofilen verschraubt. Die Traversenprofile weisen auf ihrer dem Boden abgewandten Seite einen offenen Kabelkanal auf, der zum Verlegen von elektrischen Leitungen für Leuchten oder Computer sowie von Telefonleitungen dient. Durch die auf den Traversenprofilen angeordneten Tischplatten sind die in den Kanälen verlegten Kabel im montierten Zustand der Tische nicht sichtbar. Durch die Verwendung unterschiedlich langer Traversenprofile lassen sich beliebig große Tische herstellen. Die Drehgelenke, die im Bedarfsfall zwischen den Stirnseiten benachbarter Traversenprofile angeordnet sind, ermöglichen die Einstellung von Winkeln zwischen den Traversenprofilen und damit die Ausführung unsymmetrischer, von Linearverkettungen abweichenden Aufbauten.

Wenn bei bekannten Drehgelenken, vgl. DE-A-3744706, im zentralen Bereich um den Drehmittelpunkt des Gelenks mindestens eine Schraube vorgesehen ist, ist durch die zentrale Verschraubung der freie Durchgang durch den Kabelkanal nicht mehr gewährleistet. Insbesondere bei mehreren durch den Kabelkanal verlegten Leitungen führt dies zu einer Anhäufung von Leitungen im zentralen Drehbereich infolge der dort angeordneten Schraube, wodurch es im Extremfall zu Beschädigungen der Leitungen kommen kann. Es ist folglich wünschenswert, bei einem Drehgelenk der gattungsgemäßen Art Ober- und Unterteil in ihrem zentralen Drehbereich, schraubenlos auszuführen, wie es aus DE-A-3612109 bekannt ist. Das bekannte Drehgelenk weist eine untere Basis-Gelenkhälfte auf, an der mittels die Basis-Gelenkhälfte durchdringender Schrauben eine Hohlwelle mit einem Ringflansch befestigt ist. An der Basis-Gelenkhälfte ist benachbart zur Hohlwelle eine Lauffläche angearbeitet. Zwischen dem Ringflansch und der Lauffläche ist aufsitzend auf der Hohlwelle ein flacher Laufring angeordnet, dessen äußerer Rand mittels Senkkopfschrauben an der zweiten Gelenkhälfte befestigt ist. Das bekannte Drehgelenk ist folglich nur bedingt im zentralen Drehbereich schraubenlos. Aus DE-A-3603981, EP-A-0309420 und GB-A-1438760 sind Hohlgelenke - Kugelgelenke - für Tischlampen bekannt, die ermöglichen, Kabellampen ohne Bewegungseinbußen unsichtbar durchzuführen.

Der Erfindung liegt die Aufgabe zugrunde, ein einfaches Drehgelenk zu schaffen, bei dem der Kabelkanal unbehindert durch das Drehgelenk verläuft.

Gemäß der Erfindung wird diese Aufgabe dadurch gelöst, dass das Oberteil bogenförmige Langlöcher und das Unterteil Gewindebohrungen aufweist, die jeweils auf einem Kreisbogen gleichen Durchmessers angeordnet sind.

Mit der Erfindung ist ein Drehgelenk geschaffen, das einen zentralen offenen Kabelkanal aufweist, der nicht durch eine Verschraubung im zentralen Drehbereich des Drehgelenks verengt ist. Durch die Langlöcher im Oberteil und die Gewindebohrungen im Unterteil des Drehgelenks ist mit Hilfe von durch die Langlöcher in die Gewinde eingebrachten Schrauben das sichere Verbinden von Ober- und Unterteil gewährleistet. Darüber hinaus stellt die Verschraubung von Ober- und Unterteil die Fixierung in der gewünschten Winkelstellung des Gelenks sicher. Der zentrale Drehbereich ist schraubenlos.

In einer Weiterbildung der Erfindung ist das Gelenk in einem Bereich von 0° bis 53°, in einer anderen Weiterbildung von 10° bis 63° stufenlos drehbar. Durch die stufenlose Drehbarkeit des Gelenks lassen sich beliebige Tischkonfigurationen im Drehbereich herstellen.

Vorteilhaft weist das Gelenk in zusammengesetztem Zustand zwischen den Befestigungsflanschen die Form eines Kugelabschnitts auf. Durch die abgerundete Form des Gelenks auf der dem Boden zugewandten Seite ist die Verletzungsgefahr beim Zusammenbau des Schreibtisches bzw. der Arbeitsplatte reduziert.

Bevorzugt weisen die Befestigungsflansche an ihren freien Enden Aufnahmen auf. Mit Hilfe der Aufnahmen an den freien Enden der Befestigungsflansche ist eine sichere Befestigung des Gelenks an den benachbarten Traversen mit Hilfe von SWT-Bolzen sichergestellt.

Schließlich ist es vorteilhaft, Ober- und Unterteil als Gussteile auszuführen, z.B. im Sand-, Kokillen- oder Druckgußverfahren.

Ein Ausführungsbeispiel der Erfindung ist in der Zeichnung dargestellt und wird nachfolgend im einzelnen beschrieben. Es zeigen in verkleinerter Darstellung:
- Figur 1: ein Drehgelenk-Oberteil;
- Figur 2: ein Drehgelenk-Unterteil; wobei jeweils
a) die Seitenansicht von links;
b) die Draufsicht;
c) die Seitenansicht von rechts;
d) die Untersicht;
e) die Obersicht und
f) eine perspektivische Ansicht wiedergeben;

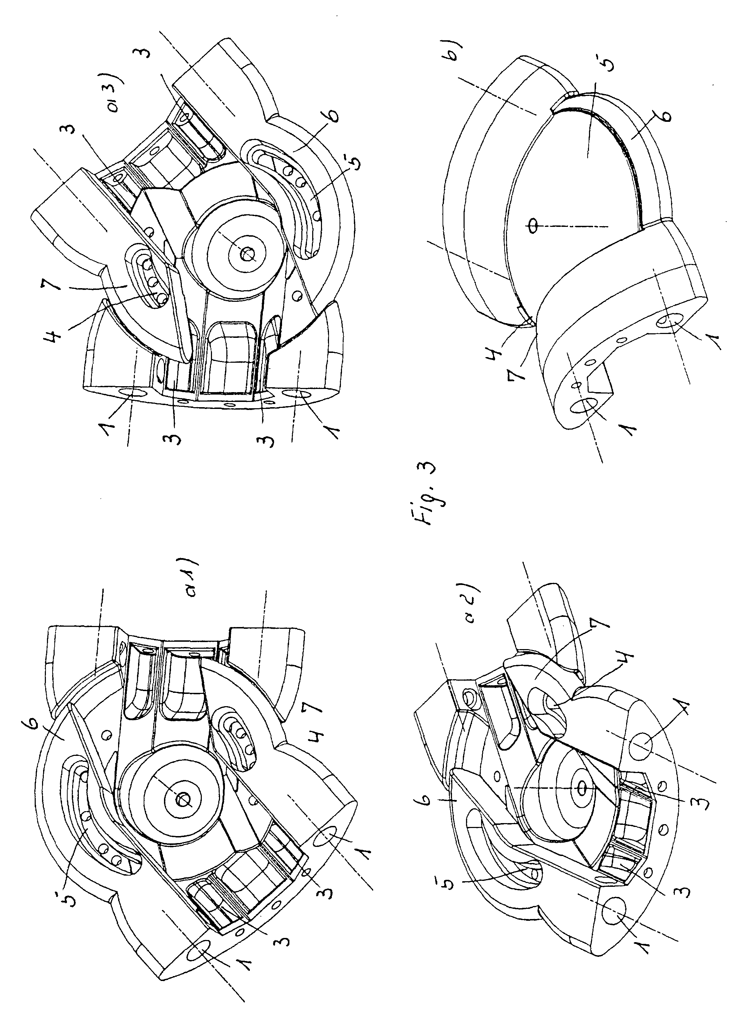

- Figur 3: das aus Ober- und Unterteil zusammengefügte Drehgelenk, wobei
a1), a2) und a3) drei Draufsichten aus unterschiedlichen Perspektiven und
b) die Rückansicht von a3) wiedergeben.

Das als Ausführungsbeispiel gewählte Drehgelenk besteht aus einem Oberteil und einem Unterteil, die als Aluminium-Sandgussteile ausgeführt sind. Ober- und Unterteil weisen jeweils einen Befestigungsflansch A und einen in der Draufsicht kreisförmigen Drehbereich B auf.

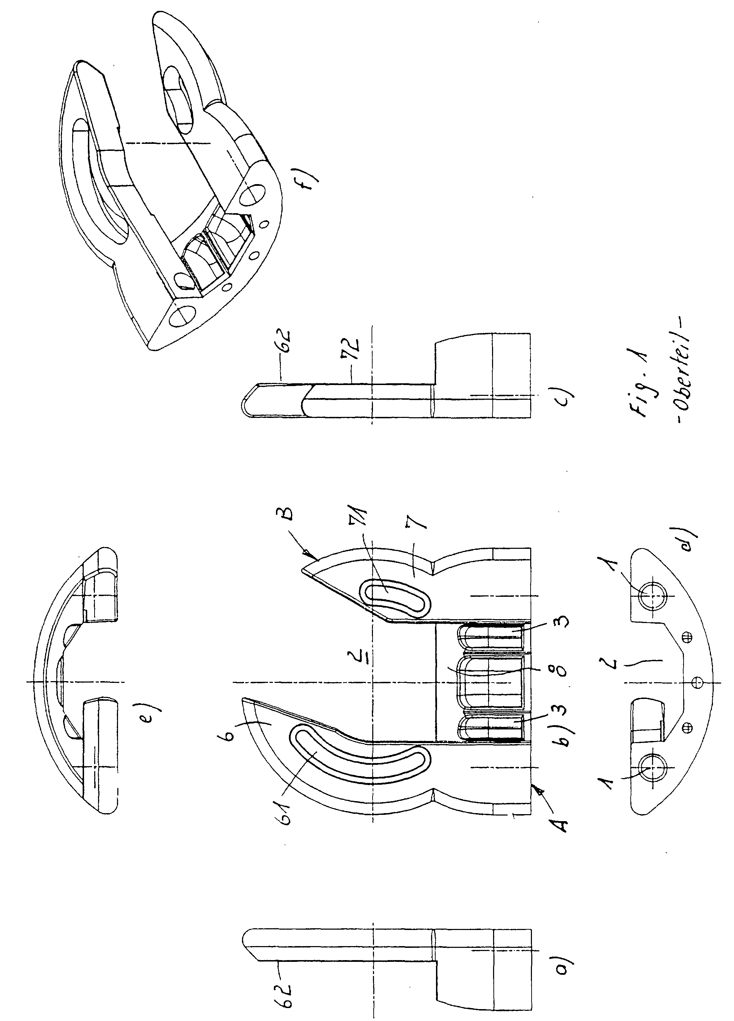

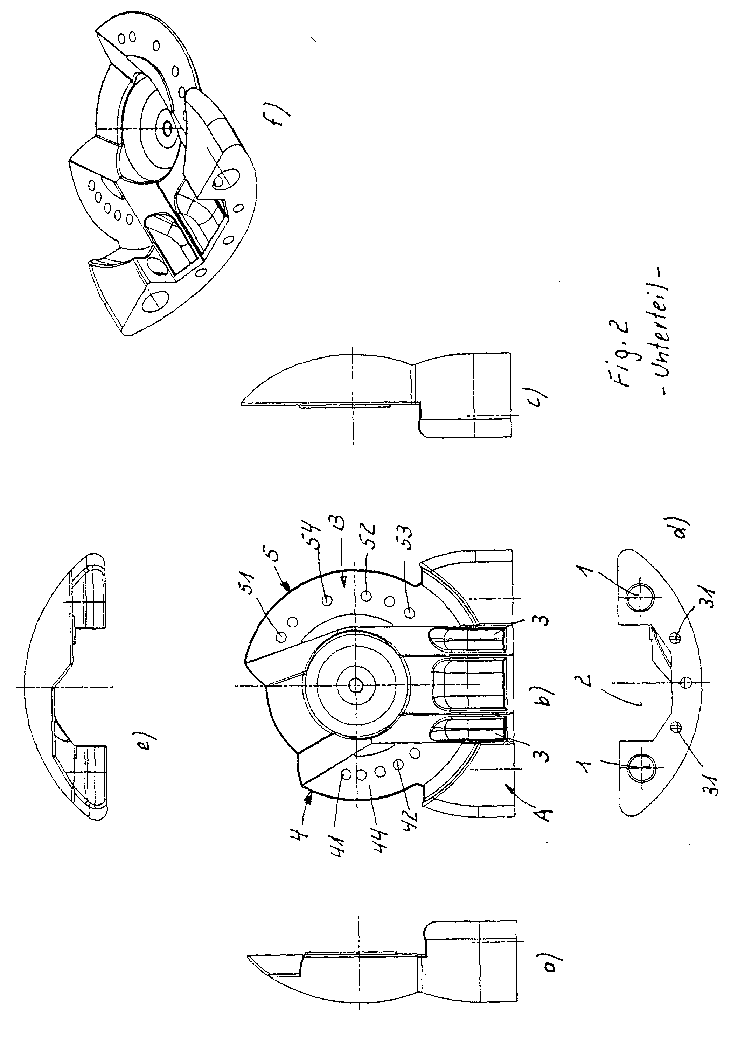

Die Befestigungsflansche A weisen an ihren dem Drehbereich B abgewandten Stirnseiten Aufnahmen 1 auf - Figuren 1d und 2d -. Im Ausführungsbeispiel sind die Aufnahmen 1 als einfache Bohrlöcher ausgeführt, in die bei der Positionierung an - nicht dargestellte - Traversenprofile Bolzen eingesteckt werden, die an den Traversenprofilen angeordnet sind. Zwischen den Aufnahmen 1 ist ein im Vertikalschnitt sechseck-förmiger Kabelkanal 2 ausgebildet. Der Kabelkanal 2 ist auf der dem Boden abgewandten Seite offen. In die Wandung des Kabelkanals 2 sind Vertiefungen 3 in Form von Langlöchern eingebracht, die sich in Richtung der Stirnseiten der Befestigungsflansche erstrecken. Von den Stirnseiten sind Bohrungen 31 in die Vertiefungen 3 eingebracht. Die Bohrungen 31 dienen zum Verschrauben des Gelenks mit den Traversenprofilen. Darüber hinaus erfolgt die Befestigung und Führung des Gelenks mit den angrenzenden Traversenprofilen durch Schrägverschraubungen, die in an den Traversenprofilen angeordneten Bolzen eingebracht sind. Gleichzeitig dienen die Schrägverschraubungen zum Heranziehen des Gelenks an das Traversenprofil. Darüber hinaus sind durch die Schrägverschraubungen Abdeckkappen im Sichtbereich der Traversen/des Gelenks vermieden.

Die Befestigungsflansche A verjüngen sich von den Stirnseiten in Richtung des Drehbereichs, in dem sie nach einem kurzen geraden Bereich in einen Kreisbogen übergehen. Der Kreisbogen endet in der kreisförmigen Ausgestaltung des Drehbereichs B. Der Drehbereich B ist beim Drehgelenk-Unterteil vollständig kreisförmig ausgeführt. Beim Oberteil ergibt sich die kreisförmige Ausgestaltung des Drehbereichs B durch die gedankliche Fortsetzung des Kreisbogens, da er auf seiner dem Befestigungsflansch A zugewandten Seite in diesen ohne Absatz übergeht, wodurch eine ebene Fläche geschaffen ist.

Der Drehbereich B des Unterteils ist durch einen Höhenabsatz sichtbar von dem Befestigungsflansch A abgesetzt. Durch einen weiteren Höhenabsatz ist der Kabelkanal 2 in dem Drehbereich B des Drehgelenk-Unterteils ausgebildet, so daß das Drehgelenk-Unterteil drei horizontale Höhenniveaus aufweist. Der Kabelkanal 2 weist im Drehbereich B im Vertikalschnitt ein trapezförmiges Profil auf. Er durchtrennt den Drehbereich B des Unterteils in zwei Teile 4 und 5, wobei der Kabelkanal etwa in der Mitte des kreisförmigen Drehbereichs B des Unterteils einen Knick ausführt - in der Zeichnung Figur 2b nach links -. Im linken Teil 4 des Drehbereichs B des Unterteils sind fünf Gewindebohrungen 41 und 42 - M8 x 10 Sackloch - vorgesehen, im rechten Teil 5 sechs Gewindebohrungen 51, 52 und 53 - M8 x 10 -. Sowohl die Bohrungen 41 und 42 des Teils 4 als auch die Bohrungen 51, 52 und 53 des Teils 5 sind auf einem Kreisbogen angeordnet. Der Drehbereich B des Unterteils weist in der Seitenansicht die Form eines Kugelabschnitts auf - Figuren 2a und 2c -. Die Teile 4 und 5 weisen glatte Oberflächen 44 und 54 auf - Figur 2b -.

Der Drehbereich B des Oberteils ist scheibenartig ausgeführt - Figuren 1 und c -. Er ist durch den Kabelkanal 2 in zwei Teile 6 und 7 aufgeteilt. Auf seiner dem Boden zugewandten Seite - unten - sind an den Teilen 6 und 7 glatte Unterseiten 62 und 72 ausgebildet. Der Kabelkanal 2 ist etwa im Mittelpunkt des Drehbereichs B mit einem Knick ausgeführt - in der Zeichnung Figur 1b nach rechts -. Im Gegensatz zum Kabelkanal 2 des Unterteils ist der Kabelkanal 2 im Drehbereich B des Oberteils an seinen beiden Seiten durch vertikale Wände begrenzt. Im Drehbereich B ist der mit Hinterschnitt 8 versehene Kabelkanal 2 des Oberteils nach oben und unten offen. Der Teil 6 des Drehbereichs B des Oberteils weist ein bogenförmiges Langloch 61 für M8 auf, der Teil 7 ein bogenförmiges Langloch 71 für M8.

In zusammengebautem Zustand des Drehgelenks liegen die Drehbereiche B von Ober-und Unterteil übereinander. Dabei sind die Bohrungen 41, 42 sowie 51, 52 und 53 in verschiedenen Kombinationsstellungen unter den Langlöchern 61 und 71 angeordnet. Die ebenen Unterflächen 62 und 72 der Teile 6 und 7 des Oberteils liegen dabei auf den ebenen Oberflächen 44 und 54 der Teile 4 und 5 des Unterteils auf. Die den Kabelkanal 2 des Oberteils ausbildenden vertikalen Wände erhöhen dabei den Kabelkanal des Unterteils auf das Höhenniveau des Befestigungsflansches des Unterteils. Dadurch ist ein von der Stirnseite des Befestigungsflansches A des Oberteils bis zur Stirnseite des Befestigungsflansches A des Unterteils durchgehender Kabelkanal 2 ausgebildet, der entlang seines gesamten Verlaufs gleich hohe Seitenwände aufweist. Links und rechts des Kabelkanals 2 ist eine ebene Oberfläche ausgebildet, die von der Stirnseite des Oberteils bis zu der Stirnseite des Unterteils reicht.

Zur Fixierung der Winkeleinstellung des Gelenkes werden Gewindeschrauben M8 durch die Langlöcher 61 und 71 des Oberteils gesteckt und mit den Gewindebohrungen im Unterteil verschraubt. Dabei kommen nicht alle Gewindebohrungen zum Einsatz. Beispielsweise findet bei einer Anordnung, bei der sich die Stirnseiten der Befestigungsflansche von Ober- und Unterteil diametral gegenüberliegen, die Gewindebohrung 51 keine Verwendung, da sie durch einen im Anschluß an das Langloch 61 befindlichen Bereich des Teils 6 des Drehbereichs B des Oberteils verdeckt ist. Zur optimalen Fixierung von Ober- zu Unterteil sollten vier Gewindeschrauben verwendet werden. Jedoch ist die Funktionssicherheit auch mit weniger Schrauben gegeben. Durch die Langlöcher besteht die Möglichkeit, das Drehgelenk stufenlos im Bereich von 0° bis 53° bzw. von 10° bis 63° zu verstellen. Damit sind auch die üblichen Einstellwinkel von 15°, 22,5°, 30°, 45° und 60° realisierbar. Durch die Verschraubung von Ober- und Unterteil sowie die Befestigung des Gelenks an den benachbarten Traversenprofilen besteht darüber hinaus die Möglichkeit, mit dem Gelenk in einem gewissen Bereich Toleranzen, die sich aufgrund der Fertigung der Gestelle ergeben, ohne Verlust an Stabilität oder Einstellbarkeit auszugleichen.

## Patentansprüche

1. Drehgelenk für ein Traversenprofil mit innenliegendem Kabelkanal (2), das aus einem Oberteil (6, 7) und einem Unterteil (4, 5) besteht, die miteinander verschraubt, an ihren einander abgewandten Stirnseiten mit Befestigungsflanschen (A) versehen und in ihrem zentralen Drehbereich (B) schraubenlos ausgeführt sind, **dadurch gekennzeichnet, daß** das Oberteil (6,7) bogenförmige Langlöcher (61, 71) und das Unterteil (4,5) Gewindebohrungen (41, 42, 51, 52, 53) aufweist, die jeweils auf einem Kreisbogen gleichen Durchmessers angeordnet sind.

2. Drehgelenk nach Anspruch 1, **dadurch gekennzeichnet, daß** Ober- und Unterteil in ihrem Drehmittelpunkt schraubenlos ausgeführt sind.

3. Drehgelenk nach Anspruch 1 oder 2, **dadurch gekennzeichnet, daß** das Gelenk in einem Bereich von 0° bis 53° stufenlos drehbar ist.

4. Drehgelenk nach Anspruch 1 oder 2, **dadurch gekennzeichnet, daß** das Gelenk in einem Bereich von 10° bis 63° stufenlos drehbar ist.

5. Drehgelenk nach einem der Ansprüche 1 bis 4, **dadurch gekennzeichnet, daß** das Gelenk in zusammengesetztem Zustand zwischen den Befestigungsflanschen (A) die Form eines Kugelabschnitts aufweist.

6. Drehgelenk nach einem der Ansprüche 1 bis 5, **dadurch gekennzeichnet, daß** die Befestigungsflansche (A) an ihren Stirnseiten Aufnahmen (1) aufweisen.

7. Drehgelenk nach einem der Ansprüche 1 bis 6, **dadurch gekennzeichnet, daß** Ober- und Unterteil als Gussteile ausgeführt sind.

## Claims

1. A rotating joint for a profiled crossbeam with inner cable duct (2), comprising an upper part (6, 7) and a lower part (4, 5) adapted to be screwed together, provided with mounting flanges (A) on their opposite front faces and designed screwless in their central rotating range (B), wherein the upper part (6,7) contains bow shaped elongated holes (61, 71) and the lower part (4, 5) contains threaded bores (41,42, 51, 52, 53) which are positioned along circular arcs with identical diameters.

2. A rotating joint according to claim 1, wherein the upper part and the lower part have a center of rotation without screws being present at the centers of rotation.

3. A rotating joint according to claim 1 or 2, wherein the joint can be turned continously in a range of 0° to 53°.

4. A rotating joint according to claim 1 or 2, wherein the joint can be turned continously in a range of 10° to 63°.

5. A rotating joint according to claims 1 to 4, wherein the joint in its fully assembled state has the form of a spherical segment between the mounting flanges (A).

6. A rotating joint according to claims 1 to 5, wherein the mounting flanges (A) are provided with receptacles (1) on their front faces.

7. A rotating joint according to claims 1 to 6, wherein the upper part and the lower part are cast parts.

## Revendications

1. Articulation rotative pour un profil de traverse avec rigole de câble intérieure (2) constituée d'une partie supérieure (6, 7), d'une partie inférieure (4,5) vissées ensemble, dotées de brides de fixation sur les parties se faisant face (A) et sans vis dans la partie de rotation centrale (8), caractérisée en ceci que la partie supérieure (6, 7) est percée de trous oblongs (61, 71) et la partie Inférieure (4, 5) de taraudages (41, 42, 51, 52, 53) qui sont disposés en arc de cercle de diamètre équivalent.

2. Articulation rotative selon la revendication 1, caractérisée en ceci que la partie supérieure et la partie inférieure ne présentent pas de vis sur le point de rotation.

3. Articulation rotative selon la revendication 1 ou la revendication 2, caractérisée en ceci que l'articulation pivote sur un domaine de 0° à 53° en continu.

4. Articulation rotative selon la revendication 1 ou 2, caractérisée en ceci que l'articulation pivote en continu dans un domaine de 10° à 63°.

5. Articulation rotative selon l'une des revendications 1 à 4, caractérisée en ceci que l'articulation assemblée présente une section sphérique dans la partie des brides de fixation (A).

6. Articulation selon l'une des revendications 1 à 5 caractérisée en ceci que les brides de fixation (A) présentent des logements sur la face frontale (1).

7. Articulation rotative selon l'une des revendications 1 à 6 caractérisée en ceci que la partie supérieure et la partie Inférieure sont des pièces moulées.
